Europäisches Patentamt

European Patent Office

Office européen des brevets

(11) Numéro de publication: **0 279 711 B1**

# FASCICULE DE BREVET EUROPEEN

(45) Date de publication de fascicule du brevet: **07.10.92**

(51) Int. Cl.5: **G08C 19/24**, G08C 23/00, B60C 23/04

(21) Numéro de dépôt: **88400044.9**

(22) Date de dépôt: **11.01.88**

(54) **Procédé de transmission de signaux entre deux éléments et dispositif pour sa mise en oeuvre.**

(30) Priorité: **28.01.87 FR 8700983**

(43) Date de publication de la demande:
**24.08.88 Bulletin 88/34**

(45) Mention de la délivrance du brevet:
**07.10.92 Bulletin 92/41**

(84) Etats contractants désignés:
**DE ES GB IT SE**

(56) Documents cités:
WO-A-82/02249       DE-B- 1 202 184
FR-A- 1 207 942       FR-A- 2 359 397
FR-A- 2 407 538       GB-A- 2 122 757

(73) Titulaire: **LABINAL**
**5 Avenue Newton**
**F-78180 Montigny le Bretonneux(FR)**

(72) Inventeur: **Pilato, René**
**25 rue de Paris**
**F-77220 Tournan(FR)**

(74) Mandataire: **Bernasconi, Jean et al**
**CABINET LEMOINE ET BERNASCONI 13, Boulevard des Batignolles**
**F-75008 Paris(FR)**

Rank Xerox (UK) Business Services

## Description

La présente invention a trait à un procédé de transmission de signaux entre deux éléments, notamment entre un élément rotatif, notamment une roue d'avion ou de véhicule, et un élément fixe, notamment un châssis ou une structure d'avion ou de véhicule, lesdits signaux pouvant représenter notamment des valeurs de paramètres relatifs au comportement d'un pneumatique, tels que par exemple température et/ou pression.

L'invention a également trait à un dispositif pour la mise en oeuvre de ce procédé.

On a déjà prévu un grand nombre de dispositifs pour transmettre un signal relatif à un paramètre, entre une roue et une structure fixe d'un véhicule ou d'un avion, le paramètre le plus souvent transmis étant relatif à la pression dans un pneumatique.

Un grand nombre de projets décrits dans la littérature prévoient, simplement, de détecteur dans la roue un changement d'état unique obtenu lorsque la pression a franchi un seuil déterminé matérialisé par la fermeture d'un pressostat, ce changement d'état étant détecté par divers couplages, notamment électromagnétiques ou capacitifs. De tels dispositifs fournissent une information trop rudimentaire pour avoir une application pratique réelle.

Un certain nombre d'autres dispositifs utilisant des moyens de couplage convenables entre la roue et la structure fixe, permettent d'effectuer des mesures de paramètres sur la roue, par exemple des mesures de pression et/ou de température dans le pneumatique, et de transmettre les résultats de ces mesures à la structure fixe par l'intermédiaire des moyens de couplage. Compte tenu du degré élevé de fiabilité qui est requis pour la transmission d'informations pouvant être déterminantes pour la sécurité d'un véhicule ou d'un aéronef, et de l'environnement électromagnétique et physique particulièrement difficile, de tels dispositifs doivent être particulièrement bien étudiés et adaptés aux problèmes à résoudre.

Ainsi, par exemple, le brevet français 2.497.342 décrit un dispositif réellement utilisé de transmission électromagnétique de mesures liées à un paramètre de roue d'avion vers la structure de l'avion par l'intermédiaire d'un couplage électromagnétique combiné à une utilisation particulièrement élaborée de fréquences, aussi bien pour la transmission des résultats de mesure dans le sens roue-structure que pour l'envoi d'énergie dans le sens structure-roue pour alimenter le circuit électronique de roue associé aux capteurs.

De même la demande de brevet français 2.529.513 décrit un dispositif particulièrement adapté à la transmission de mesures liées à des paramètres de roues de véhicule terrestre grâce à un couplage capacitif assurant une transmission différentielle, l'énergie pouvant, le cas échéant, être fournie à l'électronique de roue par le biais d'une source locale, pile ou accumulateur, placée sur la roue ou bien transmise à celle-ci depuis le châssis par le biais du couplage.

Dans tous les cas de ces dispositifs élaborés destinés à transmettre un grand nombre de mesures très précises entre la roue et la structure fixe, une des principales difficultés à résoudre réside dans la consommation d'énergie électrique liée à la transmission et il est hautement désirable que cette consommation soit aussi faible que possible. Cependant, une autre contrainte tout aussi contraignante résulte de la nécessité d'assurer une transmission de signaux qui puissent être aisément, et avec un fiabilité quasi-totale, distingués des bruits de fond et des bruits parasitaires qui résultent d'un environnement particulièrement difficile et cette exigence devient d'autant plus difficule à satisfaire que diminue la puissance électrique disponible pour la transmission.

Dans les deux dispositifs précités, ces difficultés ont été, en partie, résolues grâce aux codages des mesures de paramètre en fréquence, par exemple en codage F.S.K. La mise en oeuvre de ces dispositifs dans l'environnement réel a montré que l'on obtenait une fiabilité élevée du couplage, au prix d'une consommation d'énergie relativement modérée. Néanmoins, il serait particulièrement désirable de diminuer encore la consommation d'énergie tout en conservant, voire même en améliorant, la fiabilité de la transmission des paramètres mesurés.

On a déjà prévu, dans le brevet français 2.359.397, de transmettre des résultats de mesure, par exemple la température ou la pression, en provenance d'un capteur convenable, en émettant des impulsion, notamment des impulsions optiques, de façon que l'écart entre deux impulsions consécutives corresponde à la valeur actuelle mesurée de la grandeur physique, un récepteur étant sensible à cet écart de temps. Un tel dispositif permet de diminuer la consommation d'énergie mais ne présente qu'une fiabilité réduite, incompatible avec les exigences de sécurité liées, par exemple, aux véhicules de transport terrestre ou aérien. Indépendamment du fait qu'il exige un fonctionnement continu, il ne permet pas, à moins de prévoir des algorithmes spéciaux et complexes, de distinguer une erreur de transmission ou de réception d'avec une variation de la mesure. Il est, en outre, sensible aux parasites et est incapable de détecter une panne systématique, telle que par exemple la disparition d'un signal sur deux.

Dans un tout autre domaine, on a prévu, dans le brevet français 1.207.942, une transmission séquentielle d'un nombre de signalisations élevé d'un point à un autre sur une fréquence unique, à l'aide d'impulsions de signalisation dont l'espacement par rapport à des impulsions de synchronisation est caractéristique de la signalisation à transmettre. Chaque des lignes considérées fonctionne donc à une fréquence sous multiple de la fréquence unique de transmission et est synchronisée par cette fréquence de transmission de façon qu'à une première alternance de l'onde sinusoïdale d'une porteuse réalisant ladite fréquence unique, se trouve superposée une impulsion fine de synchronisation et, après une nouvelle période, on retrouve, sur la troisième alternance, une impulsion de signalisation dont les caractéristiques sont suffisamment distinctes de l'impulsion de synchronisation pour pouvoir être distinguée de celle-ci à la détection, ladite impulsion de signalisation pouvant ne pas être émise en fonction de l'état des différentes voies des circuits à l'émission. Un tel dispositif exige la présence d'une porteuse et est sensible au bruit de celle-ci. Il ne permet que la transmission de signalisations du genre tout ou rien et ne peut donc pas être adapté au cas d'un capteur, par exemple un capteur de mesure de pression ou de température. Un tel dispositif n'est pas économique en énergie et il est particulièrement sensible aux bruits susceptibles d'affecter la porteuse.

L'invention se propose donc de réaliser cet objectif, et ceci sans nécessiter de modification des moyens de couplage des dispositifs existants.

Un autre objectif de l'invention est de fournir un procédé de transmission de signaux entre un élément rotatif et un élément fixe, notamment entre une roue et une structure fixe, qui permette une augmentation de la quantité d'informations qui peuvent être transmises, tout en diminuant l'énergie nécessaire pour cette transmission, en supprimant notamment la nécessité d'une onde porteuse.

L'invention peut également être appliquée à la transmission de signaux entre deux éléments fixes ou mobiles quelconques et un autre objectif de l'invention est de fournir un procédé de transmission entre deux éléments non reliés par une liaison matérielle, et présentant les avantages précités.

L'invention a pour objet un procédé de transmission de signaux entre deux élément, notamment un élément rotatif et un élément fixe, dans lequel des valeurs des mesures relatives à un ou plusieurs paramètres dans l'un des éléments, notamment dans un élément rotatif, sont élaborées sous forme de signaux destinés à être transmis à des moyens récepteurs de l'autre élément, notamment une structure fixe par l'intermédiaire de moyens de couplage, de préférence électromagnétique ou capacitif, dans lequel l'on associe, à chaque valeur de mesure de paramètre destinée à être transmise par l'intermédiaire des moyens de couplage, une durée qui est une fonction de ladite valeur, caractérisé en ce que l'on transmet d'abord, par les moyens de couplage, un premier signal, ou signal de début, de courte durée, adapté à la transmission par lesdits moyens de couplage, en laissant ensuite s'écouler un silence d'une durée fonction de ladite valeur de paramètre et indépendante des conditions d'émission du signal début et, à la fin de cette durée, en transmettant un second signal, ou signal de fin, de courte durée, adapté à la transmission par lesdits moyens de couplage, le deuxième signal étant de préférence nettement différent du premier signal, des moyens sensibles à la durée entre les signaux de début et de fin directement consécutifs étant agencés, au niveau de la structure fixe, pour transformer ladite durée en une valeur de paramètre.

Ainsi, la durée séparant le signal de début du signal de fin est indépendante des conditions d'émission et de transport du signal de début ou de fin et peut prendre toute valeur désirée, en fonction de la valeur à transmettre, aucune onde porteuse, consommatrice d'énergie n'étant nécessaire.

En outre, une séquence de transmission d'une valeur de paramètre peut être initiée quand on le désire, et notamment à grande distance d'une séquence précédente, ce qui diminue également la consommation d'énergie et rend le dispositif pratiquement insensible au bruit et aux parasites.

En fait, la durée qui est fonction de la valeur mesurée de paramètre peut incorporer, ou non, selon le choix désiré, la courte durée du premier signal et/ou la courte durée du second signal. Dans la pratique, on préfère que cette durée débute à la fin du premier signal et s'achève à la fin du second signal.

Le même procédé peut également être utilisé pour, simultanément, transmettre des informations dans le sens structure-roue, par exemple pour la commande de séquences particulières dans une électronique associée à l'élément rotatif, tel que par exemple une roue.

Les premier et/ou second signaux peuvent être des signaux ayant une fréquence déterminée adaptée à la transmission par les moyens de couplage, la fréquence du premier signal étant nettement différente de celle du second signal. En variante, les premier et second signaux peuvent être à la même fréquence et se distinguer par leur durée. Tous autres signaux différents, adaptés à la transmission par les moyens de couplage peuvent aussi être utilisés.

Les moyens de couplage mis en oeuvre dans ce procédé sont de préférence des moyens de couplage électromagnétiques, par exemple du type transformateur tournant, ou capacitifs, de préférence sous forme de couplage capacitif différentiel utilisant deux capacités égales parallèles, tels que notamment ceux décrits dans les brevets français 2 497 342 et 2 529 513.

L'invention a également pour objet un dispositif pour la mise en oeuvre de ce procédé, comprenant sur l'élément rotatif, au moins un capteur pour au moins un paramètre à mesurer, et un circuit électronique associé à ce capteur, caractérisé en ce que le circuit comporte des moyens convertissant la valeur de paramètre mesurée par le capteur en une durée fonction de ladite valeur, des moyens pour générer un premier signal au début de ladite durée et un second signal à la fin de ladite durée, et les adresser aux moyens de couplage, et en ce que le circuit de structure fixe, sensible auxdits signaux comporte deux filtres en parallèle, l'un adapté au signal de début, l'autre au signal de fin, déterminant deux voies adressant respectivement les signaux de début et de fin à un dispositif de conversion du temps en impulsions.

Les moyens de couplage entre l'élément rotatif et la structure fixe peuvent avantageusement être des moyens de couplage électromagnétiques. Dans ce cas, on peut prévoir, éventuellement, de transmettre des informations ou de l'énergie depuis la structure fixe vers l'élément rotatif, ou bien au contraire on peut prévoir sur l'élément rotatif une source d'énergie telle qu'une pile ou accumulateur.

Dans une autre forme de réalisation, les moyens de couplage peuvent être du type capacitif et l'on préfère alors prévoir, sur l'élément rotatif, une source d'énergie telle que pile ou accumulateur.

L'intervalle de temps est de préférence une fonction croissante de la valeur de l'information à transmettre, cette fonction pouvant être par exemple linéaire, logarithmique ou exponentielle.

De préférence, la durée du premier signal ou signal de départ est supérieure à 100 microsecondes et inférieure à 500 microsecondes, de même que la durée du second signal ou signal de fin, la fréquence desdits signaux étant de préférence de l'ordre de 40 à 60 kHz par exemple pour le signal de départ et de 80 à 120 kHz par exemple pour le signal de fin.

D'autres avantages et caractéristiques de l'invention apparaîtront à la lecture de la description suivante, faite à titre d'exemple non limitatif et se référant au dessin annexé dans lequel :

la figure 1 représente une vue schématique d'un dispositif selon l'invention,

la figure 2 représente un diagramme d'une séquence de signaux du procédé selon l'invention.

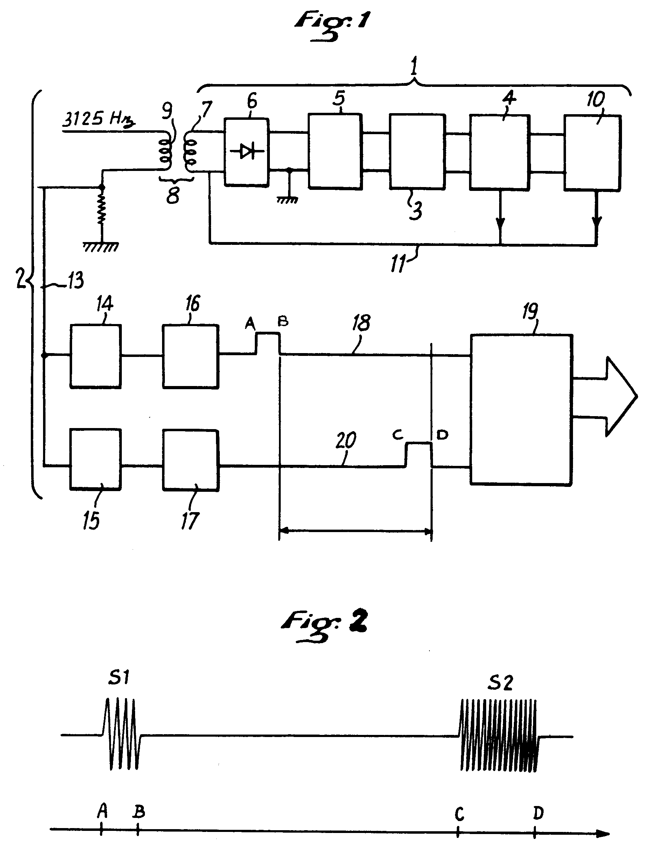

En se référant à la figure 1, on voit une installation selon l'invention comprenant un circuit de roue désigné généralement par 1 et un circuit fixe, disposé sur la structure non tournante, et généralement désigné par 2.

Le circuit 1 monté sur la roue est conçu autour d'un capteur de pression 3 de type piézo-électrique susceptible d'adresser un signal électrique correspondant à la valeur mesurée de la pression à un circuit de conversion pression/temps 4. Ce circuit 4 peut être, par exemple bâti autour d'un condensateur dont la durée de décharge dépend de la grandeur de la charge en provenance du capteur, ou un décompteur d'impulsions susceptible de décompter un nombre d'impulsions fonction de la valeur mesurée par le capteur et obtenue par un convertisseur analogique/digital habituel.

Le circuit électronique propre au capteur est alimenté à partir d'une self de tension 5 alimentée par un redresseur 6 branché aux bornes du secondaire 7 d'un transformateur tournant 8 dont le primaire 9 est porté par la partie fixe de circuit 2. Un circuit de séquence 10 est relié au dispositif de conversion 4 pour générer un premier signal, ou signal de départ pour chaque mesure du capteur et un second signal, ou signal de fin, à la fin de la durée déterminée par le convertisseur 4. Plus précisément, la fin de l'émission du signal de départ par le circuit 10 commande le démarrage du comptage du temps par le circuit 4 alors que la fin de ce comptage par le circuit 4 provoque l'émission, par le circuit 10, d'un signal de fin. Les signaux de départ et de fin sont renvoyés vers le secondaire 7 par la voie 11 pour être transmis, par couplage électromagnétique, au primaire 9 du transformateur tournant 8.

Ce transformateur tournant est du type décrit dans le brevet français 2.497.342 et il est capable d'adresser, dans le sens primaire/secondaire, de l'énergie au circuit 11 à une première fréquence de 3125 Hz ou toute autre fréquence pouvant convenir à l'application du système et, en retour, dans le sens secondaire/primaire, les séquences d'informations composées d'un premier signal, d'un silence dont la durée est fonction de la valuer mesurée de la pression et d'un second signal ou signal de fin, les premier et second signaux étant superposés à une onde porteuse à une ou deux fréquences de 50 et/ou 100 kHz ou toute autre fréquence pouvant servir à l'application du système. Lesdits signaux peuvent survenir à n'importe quel moment de la période de la porteuse. La porteuse peut aussi être absente pour diminuer encore la consommation d'énergie.

Sur la partie fixe, l'enroulement primaire 9 est relié, d'une part, à un générateur électrique de ladite première fréquence de 3125 hertz ou tout autre fréquence pouvant convenir à l'application du système et, d'autre part, par une voie d'exploitation 13, à deux filtres disposés en parallèle, l'un, 14, pour détecter un signal à 50 kHz, par exemple, et l'autre, 15, pour détecter un signal à 100 kHz, par exemple, les sorties de ces filtres étant adressées à des comparateurs respectifs 16, 17. La voie 18 en provenance du comparateur 16 et du filtre 14 transmet le signal de début à un dispositif de conversion de temps en impulsions 19. De même, la voie 20 en provenance du filtre 15 et du comparateur 17 adresse le signal de fin au dispositif 19. Celui-ci est mis en marche lorsqu'il reçoit une impulsion de début et arrêté lorsqu'il reçoit une impulsion de fin et transforme la durée séparant les deux impulsions en un signal numérique susceptible d'être expoité soit par un organe d'affichage d'une valeur de pression, soit par un calculateur de commande de gonflage ou de dégonflage.

On se réfère à la figure 2 sur laquelle on voit l'ensemble de signaux passant sur le secondaire 7, abstraction faite de l'onde sinusoïdale porteuse ayant une fréquence par exemple de 3125 hertz.

Comme cela a été expliqué ci-dessus, lorsque le capteur de pression a effectué une mesure dont il veut transmettre la valeur, on provoque l'émission d'un premier signal S1 qui est par exemple un signal sinusoïdal à 50 kHz et dont la durée AB est par exemple de 250 microsecondes. Après la fin B du signal de début S1, on laisse s'écouler un temps BC pendant lequel aucun signal n'est émis. Ce temps BC est proportionnel à la valeur de la pression à transmettre et on peut avantageusement choisir une variation de pression de l'ordre de 0,14 bars par 10 microseconds de temps BC. Lorsque le temps BC s'est écoulé, on émet le second signal S2 par exemple une fréquence de 100 kHz, la durée de ce signal CD étant de 250 microsecondes.

En utilisant des valeurs de cet ordre, il est possible de transmettre des valeurs de pression variant entre 0,07 bars et 21 bars, ce qui correspond en général aux variations de pression de pneumatiques à raison de 500 valeurs de pression transmises par seconde, compte tenu des durées de montée en tension.

La plus petite durée de BC, pour être significative, peut avantageusement être de l'ordre de 5 microsecondes, la durée la plus grande étant avantageusement de l'ordre de 1500 microsecondes.

Au niveau du dispositif 19, on peut avantageusement compter comme durée variable fonction, par exemple proportionnelle, de la valeur de la pression à transmettre, la durée BD qui inclut la durée du signal S2, ceci présentant l'avantage d'utiliser le signal S1 de début pour mettre le dispositif récepteur en état sensible assurant la détection de la fin B du premier signal S1 et mettant également le dispositif en état sensible pour détecter avec autant d'exactitude la fin D du signal S2 dont la longueur CD est également fixe, alors que le début C du signal S2 est parfaitement aléatoire dans le temps, le début A du signal S1 étant également aléatoire, au moins vu depuis la partie fixe de détection du dispositif.

Dans l'exemple qui vient d'être décrit, le premier signal S1, ou signal de début, et le second signal S2, ou signal de fin, se caractérisent par leurs fréquence, ce qui permet aux dispositifs récepteurs d'identifier ce signal comme un signal de début ou de fin. On comprend que d'autres signaux pourraient être utilisés pour former des signaux de début ou de fin. Ainsi, on pourrait, par exemple, utiliser des signaux de type numérique.

Dans un perfectionnement avantageux de l'invention, le signal de début et/ou le signal de fin peuvent eux-mêmes se distinguer par leur durée propre. Ainsi, la durée du signal de fin peut être, par exemple le double de la durée du signal de début, ce qui permet d'avoir un signal de début et un signal de fin de même fréquence. On peut également, pour davantage de sécurité, avoir des signaux de début et de fin ayant à la fois des fréquences différentes (ou d'autres caractères différents) et des durées différentes.

Enfin, dans un perfectionnement particulièrement avantageux, on peut avoir des signaux de début et/ou de fin eux-mêmes variables et susceptible de transmettre des informations. Ainsi, par exemple, le signal de début peut avoir une durée variable déterminée, par exemple, par une mesure de température dans la roue et le signal de fin peut avoir une durée variable représentant, par exemple, le "label" du capteur de pression (le label représentant l'équation d'une courbe de dérive en température, par exemple pour les capteurs). On peut ainsi connaître et corriger l'erreur due à la température sur la valeur d'une information telle que la pression.

Les signaux de début et/ou de fin peuvent également être codés pour transmettre des informations valables sur la base de valeurs autres que la variation de leur durée. Cependant, l'utilisation de la variation de leur durée pour coder des informations est préférée dans le cadre de la présente invention non seulement en raison d'une plus grande simplicité des moyens d'élaboration des signaux, des moyens de réception et d'interprétation, mais encore de la grande sécurité et de la fiabilité accrue du procédé selon l'invention.

Bien que l'invention ait été décrite à propos d'une forme de réalisation particulière, il est bien entendu qu'elle n'y est nullement limitée et qu'on peut lui apporter diverses modifications sans pour cela s'éloigner ni de son cadre ni de son esprit.

**Revendications**

1.  Procédé de transmission de signaux entre deux éléments, notamment un élément rotatif et un élément fixe, dans lequel des valeurs de mesures relatives à un ou plusieurs paramètres dans l'un des éléments, notamment dans un élément rotatif, sont élaborées sous forme de signaux destinés à être transmis à des moyens récepteurs de l'autre élément, notamment une structure fixe, par l'intermédiaire de moyens de couplage, dans lequel on associe, à chaque valeur de mesure de paramètre destinée à être transmise par l'intermédiaire des moyens de couplage, une durée (BD) qui est une fonction de ladite valeur, caractérisé en ce que l'on transmet d'abord par les moyens de couplage, un premier signal (S1), ou signal de début, de courte durée, adapté à la transmission par lesdits moyens de couplage, en laissant ensuite s'écouler un silence d'une durée BC fonction de ladite valeur de paramètre et indépendante des conditions d'émission du signal de début et, à la fin de cette durée (BC), en transmettant un second signal (S2) ou signal de fin, de courte durée, également adapté à la transmission par lesdits moyens de couplage, le deuxième signal étant de préférence nettement différent du premier signal, des moyens sensibles à la durée entre les signaux de début et de fin directement consécutifs étant agencés, au niveau dudit autre élément pour transformer ladite durée en une valeur de paramètre.

2. Procédé selon la revendication 1, caractérisé en ce que le signal de début (S1) et/ou le signal de fin (S2) sont des signaux caractérisés par leur fréquence.

3. Procédé selon la revendication 1, caractérisé en ce que le signal de début (S1) et/ou le signal de fin (S2) sont des signaux caractérisés par leur durée.

4. Procédé selon l'une quelconque des revendications 1 à 3, caractérisé en ce que le signal de début (S1) et/ou le signal de fin (S2) comportent des caractéristiques variables codant des informations variables.

5. Procédé selon la revendication 4, caractérisé en ce que la durée du signal de début (S1) et/ou du signal de fin (S2) est variable et code une information.

6. Procédé selon l'une quelconque des revendications 1 à 5, caractérisé en ce que la durée à laquelle sont sensibles les moyens agencés au niveau de la structure fixe est la durée (BD) s'étendant entre la fin du signal de début (S1) et la fin du signal de fin (S2).

7. Procédé selon l'une quelconque des revendications 1 à 6, caractérisé en ce que les signaux de début et de fin modulent une onde porteuse.

8. Procédé selon l'une quelconque des revendications 1 à 7, caractérisé en ce que l'on utilise des moyens de couplage électromagnétique, notamment par transformateur tournant.

9. Procédé selon l'une quelconque des revendications 1 à 7, caractérisé en ce que l'on utilise des moyens de couplage capacitif, notamment à l'aide de deux capacités identiques, les circuits fixes et rotatifs étant agencés pour une transmission différentielle éliminant les parasites.

10. Procédé selon l'une quelconque des revendications 1 à 9, caractérisé en ce que l'on transfère, en sens inverse, une énergie électrique depuis la structure fixe vers la roue.

11. Procédé selon l'une quelconque des revendications 1 à 10, caractérisé en ce que la fonction transformant la valeur de paramètre en durée est une fonction proportionnelle.

12. Dispositif pour la mise en oeuvre du procédé selon l'une quelconque des revendications précédentes, comprenant, sur l'élément rotatif, au moins un capteur (3) pour au moins un paramètre à mesurer, et un circuit électronique (1) associé à ce capteur, caractérisé en ce que ledit circuit électronique comportant des moyens (4) convertissant la valeur de paramètre mesurée par le capteur en une durée fonction de ladite valeur, des moyens (10) pour générer un premier signal au début de ladite durée et un second signal à la fin de ladite durée et les adresser aux moyens de couplage (8) et en ce que le circuit de structure fixe, sensible auxdits signaux, comporte deux filtres en parallèle, l'un (14) adapté au signal de début, l'autre (15) au signal de fin, déterminant deux voies (18, 20) adressant respectivement les signaux de début et de fin à un dispositif (19) de conversion du temps en impulsions.

13. Dispositif selon la revendication 12, caractérisé en ce que ledit dispositif de conversion est agencé pour assurer la conversion du temps s'écoulant entre la fin du premier signal et la fin du second signal.

14. Dispositif selon l'une quelconque des revendications 12 et 13, caractérisé en ce que les moyens de couplage sont du type à transformateur tournant (8).

**15.** Dispositif selon l'une quelconque des revendications 12 à 14, caractérisé en ce que les moyens de couplage sont du type capacitif et notamment à deux capacités parallèles pour une transmission différentielle.

**Claims**

**1.** A process for transmitting signals between two elements, in particular a rotary element and a fixed element, in which values of measurements relating to one or more parameters in one of the elements, in particular in a rotary element, are processed in the form of signals adapted to be transmitted to receiving means of the other element, in particular a fixed structure, through coupling means, there being associated with each parameter measurement value to be transmitted through the coupling means, a duration (BD) which is a function of said value, characterized in that there is first of all transmitted, through the coupling means, a first signal (S1), or start signal, of short duration, adapted for transmission through said coupling means, while thereafter allowing a silence to elapse for a duration (BC) which is a function of said parameter value and independent of the emitting conditions of the start signal and, at the end of said latter duration (BC), transmitting a second signal (S2), or end signal, of short duration, also adapted for transmission through said coupling means, said second signal being preferably distinctly different from said first signal, means responsive to the duration between directly consecutive start and end signals being arranged, at said other element, for converting said duration into a parameter value.

**2.** A process according to claim 1, characterized in that the start signal (S1) and/or the end signal (S2) are signals characterized by their frequency.

**3.** A process according to claim 1, characterized in that the start signal (S1) and/or the end signal (S2) are signals characterized by their duration.

**4.** A process according to any one of claims 1 to 3, characterized in that the start signal (S1) and/or the end signal (S2) include variable characteristics for encoding variable data.

**5.** A process according to claim 4, characterized in that the duration of the start signal (S1) and/or of the end signal (S2) is variable and encodes variable data.

**6.** A process according to any one of claims 1 to 5, characterized in that the duration to which the means arranged at the fixed structure are responsive is the duration (BD) between the end of the start signal (S1) and the end of the end signal (S2).

**7.** A process according to any one of claims 1 to 6, characterized in that the start and end signals modulate a carrier-wave.

**8.** A process according to any one of claims 1 to 7, characterized in that electromagnetic coupling means, in particular comprising a rotary transformer, are used.

**9.** A process according to any one of claims 1 to 7, characterized in that capacitive coupling means, in particular comprising two identical capacitances, are used, the fixed and rotary circuits being arranged for a differential transmission eliminating interferences.

**10.** A process according to any one of claims 1 to 9, characterized in that electric energy is transferred in an opposite direction from the fixed structure to the wheel.

**11.** A process according to any one of claims 1 to 10, characterized in that the function for converting the parameter value into a duration is a proportional function.

**12.** A device for carrying out the process according to any one of the preceding claims, said device comprising, on the rotary element, at least one detector (3) for at least one parameter to be measured, and an electronic circuit (1) associated with said detector, characterized in that said electronic circuit comprises means (4) for converting the parameter value measured by the detector into a duration which is a function of said value, means (10) for producing a first signal at the start of said duration and a second signal at the end of said duration and for sending said signals to the coupling means (8) and in that the fixed structure circuit which is responsive to said signals comprises two filters connected in parallel, one filter (14) being adapted to the start signal and the other filter (15) to the end signal, defining two channels (18, 20) for respectively sending the start and end signals to a device (19) for converting time into pulses.

**13.** A device according to claim 12, characterized in that said converting device is adapted to ensure the conversion of time elapsing between the end of the first signal and the end of the second signal.

14. A device according to any one of claims 12 and 13, characterized in that the coupling means are of the type with a rotary transformer (8).

15. A device according to any one of claims 12 to 14, characterized in that the coupling means are of a capacitive type, and in particular with two parallel capacitances for effecting a differential transmission.

**Patentansprüche**

1. Verfahren zur übertragung von Signalen zwischen zwei Elementen, insbesondere einem sich drehenden Element und einem festen Element, bei dem die Messwerte bezüglich eines oder mehrerer Parameter in einem der Elemente, insbesondere dem sich drehenden Element, gewonnen werden unter Bildung von Signalen, die dazu bestimmt sind, zu den Empfängermitteln an dem anderen Element, insbesondere einem festen Element durch den Einsatz von Kopplungsmitteln, übertragen zu werden, wobei jedem Meßwert eines Parameters, der dazu bestimmt ist, durch die Kopplungsmittel übertragen zu werden, eine bestimmte Dauer (BD) zugeordnet wird, die eine Funktion des Wertes ist, dadurch gekennzeichnet, daß durch die Kopplungsmittel zuerst ein erstes Signal (S1) oder ein Startsignal von kurzer Dauer übertragen wird, das an die übertragung durch die Kopplungsmittel angepaßt ist, daß anschließend eine Zeitspanne BC verstreicht, die eine Funktion des Wertes des Parameters und unabhängig von der Bedingung des Aussendens des Anfangssignals ist, daß am Ende der Zeitspanne (BC) ein zweites Signal, oder ein Endsignal kurzer Dauer übertragen wird, das in gleicher Weise an die übertragung durch die Kopplungsmittel angepaßt ist, wobei das zweite Signal vorzugsweise deutlich unterschiedlich gegenüber dem ersten Signal ist, daß Mittel vorgesehen sind, die die Zeitdauer zwischen direkt aufeinander folgenden Anfangs- und Endsignalen zu erkennen in der Lage sind, und auf der Stufe des anderen Elements diese Zeitdauer in einer Wert des Parameters umzusetzen.

2. Verfahren nach Anspruch 1 dadurch gekennzeichnet, daß das Anfangssignal (S1) und/oder das Endsignal (S2) Signale sind, die durch ihre Frequenz charakterisiert sind.

3. Verfahren nach Anspruch 1 dadurch gekennzeichnet, daß das Anfangssignal (S1) und/oder das Endsignal (S2) Signale sind, die durch ihre Dauer charakterisiert sind.

4. Verfahren nach einem der Ansprüche 1 bis 3 dadurch gekennzeichnet, daß das Anfanggsignal (S1) und/oder das Endsignal (S2) charakteristische Variable beinhalten, in denen veränderliche Informationen codiert sind.

5. Verfahren nach Anspruch 4 dadurch gekennzeichnet, daß das Anfangssignal (S1) und/oder das Endsignal (S2) veränderbar ist und daß in ihren eine Information codiert ist.

6. Verfahren nach einem der Ansprüche 1 bis 5 dadurch gekennzeichnet, daß die Zeitdauer, die die auf der Stufe des festen Bauteils vorgesehenen Mittel zu erkennen in der Lage ist, die Zeitdauer (BD) ist, die sich zwischen dem Ende des Anfangsignals (S1) und dem Ende des Endsignals (S2) erstreckt.

7. Verfahren nach einem der Ansprüche 1 bis 6 dadurch gekennzeichnet, daß das Anfangssignal (S1) und das Endsignal (S2) eine Trägerfrequenz(welle) modulieren.

8. Verfahren nach einem der Ansprüche 1 bis 7 dadurch gekennzeichnet, ein elektromagnetisches Kopplungsmittel, insbesondere ein Wechselstromtransformator verwendet wird.

9. Verfahren nach einem der Ansprüche 1 bis 7 dadurch gekennzeichnet, daß ein kapazitives Kopplungsmittel, insbesondere mit Hilfe von zwei identischen Kondensatoren verwendet wird, wobei die festen und rotierenden Schaltkreise für eine Differentialübertragung eingerichtet sind, um Streuungen auszuschalten.

10. Verfahren nach einem der Ansprüche 1 bis 9 dadurch gekennzeichnet, daß in umgekehrter Richtung, elektrische Energie von dem festen Bauteil zu dem Rad übertragen wird.

11. Verfahren nach einem der Ansprüche 1 bis 10 dadurch gekennzeichnet, daß die Funktion zur Umsetzung des Wertes des Parameters in eine Zeitdauer eine proportionale ist.

12. Vorrichtung zur Durchführung des Verfahrens nach einem der vorhergehenden Ansprüche, mit wenigstens einem Aufnehmer (3), der auf dem rotierenden Element angeordnet ist, um wenigstens einen Parameter zu messen, sowie mit einem elektronischen Schaltkreis (1), der mit dem Schaltkreis verbunden ist, dadurch gekennzeichnet, daß der elektronische Schaltkreis Mittel (4) zum Umsetzen des durch den Aufnehmer gemessenen Wertes des Parameters in eine Funktion einer Zeitdauer, die eine Funktion des Wertes ist, daß Mittel (10) zum Erzeugen eines ersten Signals am Anfang der Zeitdauer und eines zweiten Signals am Ende der Zeitdauer vorhanden sind, die diese Signale an Kopplungsmittel (8) leiten, und daß der Schaltkreis des festen Bauteils, der in der Lage ist, diese Signale zu erkennen, zwei Filter aufweist, die parallelgeschaltet sind, wobei das eine Filter (14) auf das Anfangssignal, und das andere (15) auf das Endsignal eingerichtet ist, und die zwei Leitungen (18, 20) bestimmen, die jeweils die Anfangs- und Endsignale einer Einrichtung (19) zum Umsetzen der Zeitdauer in Impulse zuleiten.

13. Vorrichtung nach Anspruch 12, dadurch gekennzeichnet, daß die Einrichtung zum Umsetzen dazu eingerichtet ist, die Umsetzung der signalfreien Zeit zwischen dem Ende des ersten Signals und dem Ende dem zweiten Signals sicherzustellen.

14. Vorrichtung nach einem der Ansprüche 12 oder 13, dadurch gekennzeichnet, daß die Kopplungsmittel vom Typ eines Wechselstromtransformators (8) sind.

15. Vorrichtung nach einem der Ansprüche 12 bis 14, dadurch gekennzeichnet, daß die Kopplungsmittel vom kapazitiven Typ, insbesondere zwei parallele Kondensatoren für eine Differentialübertragung sind.

## Fig. 1

## Fig. 2